**Europäisches Patentamt**

**European Patent Office**

**Office européen des brevets**

(11) Veröffentlichungsnummer: **0 081 637**
**A1**

# (12) EUROPÄISCHE PATENTANMELDUNG

(21) Anmeldenummer: **82108804.4**

(22) Anmeldetag: **23.09.82**

(51) Int. Cl.³: **G 01 N 1/22**

(30) Priorität: **10.11.81 DE 8132855 U**

(43) Veröffentlichungstag der Anmeldung: **22.06.83**
**Patentblatt 83/25**

(84) Benannte Vertragsstaaten: **BE DE FR GB**

(71) Anmelder: **Krupp Polysius AG, Graf-Galen-Strasse 17,**
**D-4720 Beckum (DE)**

(72) Erfinder: **Weber, Rudolf, Elisabethstrasse 37,**
**D-4740 Oelde 1 (DE)**
Erfinder: **Riedel, Horst, Kampstrasse 4, D-4732 Vorhelm**
**(DE)**

(74) Vertreter: **Tetzner, Volkmar, Dr.-Ing. Dr. Jur.,**
**Van-Gogh-Strasse 3, D-8000 München 71 (DE)**

(54) **Entnahme- und Analysiervorrichtung für staubhaltige Gasproben.**

(57) Die Anmeldung betrifft eine Entnahme- und Analysiervorrichtung für staubhaltige Gasproben, wobei der Gasentnahmeanschluß in Form einer Beruhigungskammer (6) ausgeführt und das Umschaltventil durch ein Dreiwegeventil (14) gebildet ist, das einen Abreinigungs-Preßluftanschluß (18) aufweist und mit einem Zeitsteuergerät (19) verbunden ist.

EP 0 081 637 A1

0081637

Entnahme- und Analysiervorrichtung für staubhaltige Gasproben.

Die Erfindung betrifft eine Entnahme- und Analysiervorrichtung für staubhaltige Gasproben, insbesondere zum Anbau an eine Abgasleitung eines Wärmetauschers in einem Schwebegasvorwärmer, enthaltend einen Gasentnahmeanschluß, eine mit diesem Gasentnahmeanschluß verbundene Gasentnahmesonde, ein Analysiergerät, eine zwischen Gasentnahmesonde und Analysiergerät angeordnete Gasproben-Förderleitung sowie ein Umschaltventil in dieser Gasproben-Förderleitung.

Bei einer bekannten Entnahme- und Analysiervorrichtung, die vorzugsweise an eine Abgasleitung eines Zyklonvorwärmers angebaut werden kann, ist das eine Ende der Gasproben-Förderleitung so ausgebildet, daß es in die entsprechende Abgasleitung des Wärmetauschers hineinragen kann und dadurch den Gasentnahmeanschluß bildet, wobei an dieser Stelle auch eine Gasentnahmesonde vorgesehen sein kann. Die Gasproben-Förderleitung steht dabei einerseits über einen Injektor durch sein anderes Ende mit einem unteren Abschnitt der genannten Abgasleitung in Verbindung, während sie andererseits durch eine gesonderte Prüfgasleitung mit dem Analysiergerät verbunden ist. Durch die Gasproben-Förderleitung wird mit Hilfe des Injektors ständig eine Bypassführung einer Gasprobenmenge aufrechterhalten, aus der dann in vorbestimmten Zeiten jeweils eine Teilprobe über die Prüfgasleitung dem Analysiergerät zugeführt wird, indem wenigstens ein Umschaltventil in den genannten Leitungen entsprechend geschaltet wird.

Der Erfindung liegt nun die Aufgabe zugrunde, eine Entnahme- und Analysiervorrichtung der eingangs genannten Art zu schaffen, die sich vor allem durch ihren einfachen Aufbau und durch ihre relativ einfache Anbaumöglichkeit an eine Wärmetauscher-Abgasleitung auszeichnet, dabei jedoch gleichzeitig die Möglichkeit bietet, eine Gasprobe aus einem Abgasteil mit weniger turbulenter Strömung entnehmen zu können.

Diese Aufgabe wird erfindungsgemäß dadurch gelöst, daß der Gasentnahmeanschluß in Form einer Beruhigungskammer ausgeführt und das Umschaltventil durch ein Dreiwegeventil gebildet ist, das einen Abreinigungs-Preßluftanschluß aufweist und mit einem Zeitsteuergerät verbunden ist.

Die Ausbildung der erfindungsgemäßen Vorrichtung mit einer Beruhigungskammer als Gasentnahmeanschluß bietet zunächst einmal die Möglichkeit, daß die gewünschte Gasprobe aus einem strömungsmäßig beruhigten Abgasteil entnommen werden kann, aus dem in dieser Beruhigungskammer auch noch eventuell im Gas vorhandene schwerere Staubteilchen herausfallen können, wodurch Störungen (insbesondere an der Gasentnahmesonde) aufgrund von größeren Staubteilchen weitgehend vermieden werden. Mit Hilfe des Zeitsteuergerätes kann das Dreiwegeventil in bestimmten Zeitabschnit-

ten so umgeschaltet werden, daß der Abreinigungs-Preßluftanschluß geöffnet und gleichzeitig die Verbindung zum Analysiergerät geschlossen wird, damit eine Preßluft-Durchblasung des entsprechenden Gasproben-Förderleitungsabschnittes, der Gasentnahmesonde und der Beruhigungskammer erfolgen kann. Diese Steuerung des Dreiwegeventiles kann bevorzugt automatisch erfolgen, so daß hierfür kein besonderes Bedienungspersonal erforderlich ist. Diese Gasentnahme- und Abreinigungsmöglichkeiten führen zu einem weitgehend störungsfreien Betrieb der Entnahme- und Analysiervorrichtung, deren Wartungsarbeiten außerdem auf ein Minimum beschränkt werden können, wobei diese Vorrichtung gleichzeitig einen äußerst einfachen konstruktiven Aufbau bedingt.

Weitere Einzelheiten sind Gegenstand der Unteransprüche.

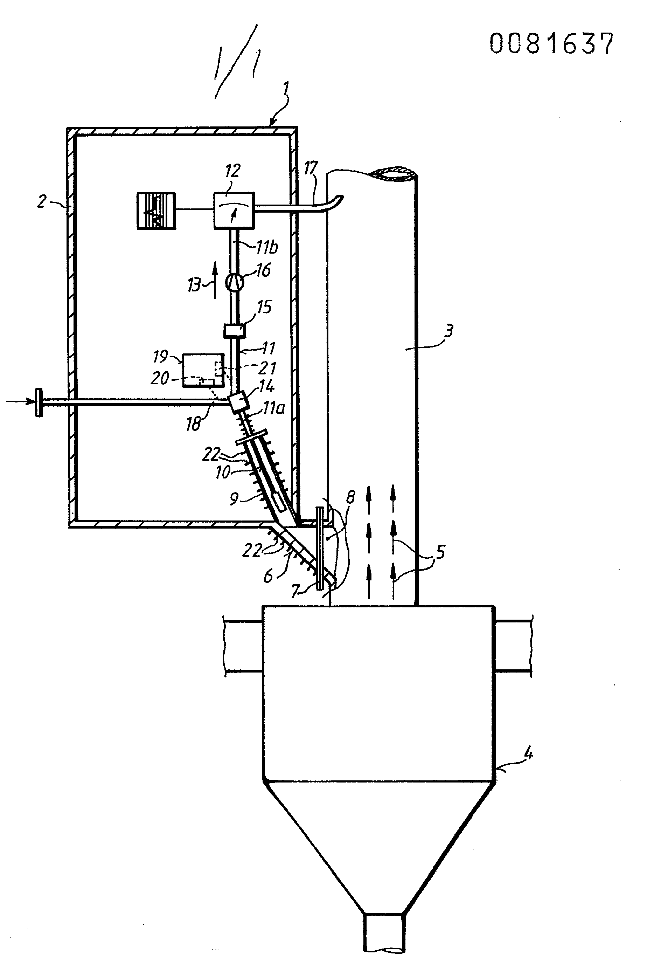

Im folgenden sei ein bevorzugtes Ausführungsbeispiel der Erfindung anhand der Zeichnung beschrieben, die eine stark vereinfacht (schematisch) dargestellte Vorrichtung wiedergibt.

Die erfindungsgemäße Entnahme- und Analysiervorrichtung 1 besitzt ein Gehäuse 2, das nahezu alle Vorrichtungsteile umgibt.

Bei diesem bevorzugten Ausführungsbeispiel sei angenommen, daß die Vorrichtung 1 so ausgebildet ist, das sie an die Abgasleitung 3 eines zentralen Wärme-

0081637

tauscher-Wirbelschachtes 4 angebaut ist, der Teil eines nicht näher veranschaulichten Schwebegasvorwärmers ist, der von den Abgasen (Pfeile 5) eines ebenfalls nicht näher veranschaulichten Drehrohrofens oder dgl. durchströmt wird, wie es beispielsweise bei Ofenanlagen der Steine- und -Erden-Industrie oder der Erzaufbereitung bekannt ist.

Während innerhalb des Gehäuses 2 nahezu alle wesentlichen Vorrichtungteile untergebracht sind, ist am unteren Ende dieses Gehäuses 2 ein Gasentnahmeanschluß in Form einer Beruhigungskammer angeschlossen oder ausgebildet. Diese Beruhigungskammer 6 ist beispielsweise durch Flansche 7 mit einem Probeentnahmestutzen 8 der Abgasleitung 3 verbunden. Die Beruhigungskammer 6 weist eine sich nach unter verjüngende, einseitige Trichterform auf und besitzt den bereits zuvor angedeuteten seitlichen Anschluß (mit Flanschen 7) für den Anbau an die Abgasleitung 3, während am erweiterten oberen Teil der Beruhigungskammer 6 ein rohrförmiger Anschlußstutzen 9 vorgesehen ist, der vorzugsweise schräg nach oben in das Gehäuse 2 hineinragt.

In den Anschlußstutzen 9 ragt von oben her etwa koaxial eine in üblicher Weise ausgebildete Gasentnahmesonde 10 hinein, deren oberes Ende an den unteren Abschnitt 11a einer Gasproben-Förderleitung 11 angeschlossen ist, deren oberer Abschnitt 11b in ein Analysiergerät 12 übliche Ausführung einmündet. In der Gasproben-Förderleitung 11 sind zwischen der Gas-

0081637

entnahmesonde 10 und dem Analysiergerät 12 - in Gasproben-Förderrichtung (Pfeil 13) gesehen - nacheinander ein als Umschaltventil verwendetes Dreiwegeventil 14, ein üblicher Filter 15 mit Wasserabscheider
sowie eine übliche Gasförderpumpe 16 angeordnet. Im
veranschaulichten Ausführungsbeispiel ist im oberen
Teil der Vorrichtung 1 ein Abgasrohr 17 für analysierte Gasproben angeordnet, wobei dieses Abgasrohr 17 dem Analysiergerät 12 zugeordnet und an die
Abgasleitung 3 angeschlossen ist, indem es kurz in
dieses hineinragt und in Abgasströmungsrichtung ausmündet. Auf diese Weise wird im vorliegenden Falle
eine Bypassleitung für die Gasprobeentnahme gegenüber Abgasleitung 3 des Wirbelschachtes 4 gebildet.
Es sei jedoch bereits an dieser Stelle betont, daß
je nach Einbaufall der Vorrichtung 1 das Abgasrohr 17
des Analysiergerätes 12 auch in anderer Weise abgeleitet werden kann.

Das Dreiwegeventil 14, das vorzugsweise durch ein
Dreiwege-Magnetventil gebildet wird, besitzt neben
seinen beiden Anschlüssen an die Gasproben-Förderleitung 11 noch einen dritten Anschluß, der durch
einen Abreinigungs-Preßluftanschluß 18 gebildet
wird, der an eine nicht näher veranschaulichte, vorzugsweise in üblicher Weise in Großbetrieben vorhandene Preßluftleitung angeschlossen sein und mit
Preßluft von entsprechend hohem Druck (zum Beispiel
etwa 6 bar) versorgt werden kann.

Dieses Dreiwegeventil 14 steht ferner mit einem
Zeitsteuergerät 19 in Verbindung, daß mit zwei Zeit-

- 6 -

0081637

relais 20,21 derart ausgebildet ist, daß das eine Zeitrelais 20 im Sinne eines intervallartigen Öffnens der Abreinigungs-Preßluftanschlusses 18 und gleichzeitig das andere Zeitrelais 21 im Sinne eines kurzzeitigen Schließens des oberen Förderleitungsteiles gesteuert werden kann. Auf diese Weise kann in bestimmten Zeitabschnitten (zum Beispiel stündlich) der wesentliche, den staubhaltigen Gasproben besonders ausgesetzte Gasentnahmeabschnitt mit dem Dreiwegeventil 14, dem unteren Förderleitungsabschnitt 11a, der Gasentnahmesonde 10 und dem Anschlußstutzen 9 mittels Preßluft abgereinigt werden. Diese nur kurzzeitige, beispielsweise nur einige Sekunden dauernde Preßluftabreinigung kann ohne Schwierigkeiten automatisch gesteuert werden. Nach diesem Abreinigungsintervall wird der Preßluftanschluß 18 durch das zugehörige Zeitrelais 20 wieder geschlossen, während gleichzeitig das andere Zeitrelais 21 den vom Dreiwegeventil 14 zum Analysiergerät 12 führenden Abschnitt der Förderleitung 11 öffnet.

Die Zuverlässigkeit und Einfachheit dieser Vorrichtung 1 kann auch dadurch vorteilhaft beeinflußt werden, daß die Gasförderpumpe 16 nur für eine verhältnismäßig kleine Gasförderleistung von etwa 40-100 l/min, vorzugsweise von etwa 60 l/min ausgeführt ist. Hierbei wird es ferner vorgezogen, diese geringe Gasprobenmenge gleichzeitig auf eine zweckmäßige Temperatur abzukühlen, wozu - wie in der Zeichnung angedeutet - vorzugsweise die Beruhigungskammer 6, der Anschlußstutzen 9 und der untere Förderleitungs-

0081637

abschnitt 11a (oder auch nur einige dieser Teile) Kühleinrichtungen beispielsweise in Form von einfachen Kühlrippen (22) aufweisen.

Patentansprüche:

1. Entnahme- und Analysiervorrichtung für staubhaltige Gasproben, insbesondere zum Anbau an eine Abgasleitung eines Wärmetauschers in einem Schwebegasvorwärmer, enthaltend einen Gasentnahmeanschluß, eine mit diesem Gasentnahmeanschluß verbundene Gasentnahmesonde, ein Analysiergerät, eine zwischen Gasentnahmesonde und Analysiergarät angeordnete Gasproben-Förderleitung sowie ein Umschaltventil in dieser Gasproben-Förderleitung, dadurch gekennzeichnet , daß der Gasentnahmeanschluß in Form einer Beruhigungskammer (6) ausgeführt und das Umschaltventil durch ein Dreiwegeventil (14) gebildet ist, das einen Abreinigungs-Preßluftanschluß (18) aufweist und mit einem Zeitsteuergerät (19) verbunden ist.

2. Vorrichtung nach Anspruch 1 dadurch gekennzeichnet, daß die Beruhigungskammer (6) eine sich nach unten verjüngende,einseitige Trichterform, einen seitlichen Anschluß (7) für den Anbau an eine Wärmetauscher-Abgasleitung (3) sowie einen am erweiterten oberen Teil vorgesehenen Anschlußstutzen (9) für die Gasentnahmesonde (10) aufweist.

3. Vorrichtung nach den Ansprüchen 1 und 2, dadurch gekennzeichnet, daß die Beruhigungskammer (6) und/oder wenigstens der im Bereich dieser Beruhigungskammer befindliche Abschnitt (11a) der Gasproben-Förderleitung (11) Kühleinrichtungen aufweisen.

4. Vorrichtung nach Anspruch 3, dadurch gekennzeichnet, daß als Kühleinrichtung äußere Kühlrippen (22) vorgesehen sind.

5. Vorrichtung nach wenigstens einem der vorhergehenden Ansprüche, dadurch gekennzeichnet, daß in der Gasproben-Förderleitung (11) eine Gasförderpumpe (16) für eine Gasförderleistung von 40-100 l/min, vorzugsweise etwa 60 l/min angeordnet ist.

6. Vorrichtung nach Anspruch 1, dadurch gekennzeichnet, daß das Dreiwegeventil als Dreiwege-Magnetventil (14) vorgesehen und das Zeitsteuergerät (19) mit zwei Zeitrelais (20,21) in der Weise ausgebildet ist, daß das eine Relais (20) im Sinne/eines intervallartigen Öffnens des Abreinigungs-Preßluftanschlusses (18) und gleichzeitig das andere Relais (21) im Sinne eines kurzzeitigen Schließens steuerbar ist.

7. Vorrichtung nach wenigstens einem der vorhergehenden Ansprüche, dadurch gekennzeichnet, daß in der Gasproben-Förderleitung (11) ein Filter (15) mit Wasserabscheider der Gasförderpumpe (16) vorgeschaltet ist.

8. Vorrichtung nach wenigstens einem der Ansprüche 1-7, dadurch gekennzeichnet, daß das Analysiergerät (12) ein im oberen Teil der Vorrichtung (1) angeordnetes und an eine Wärmetauscher-Abgasleitung (3) anschließbares Abgasrohr (17) aufweist.

0081637

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-1 949 082  (HARTMANN & BRAUN AG) * Anspruch 1; Figur * | 1 | G 01 N    1/22 |
| A | * Anspruch 1; Figur * | 6 | |
| Y | US-A-4 115 229  (D.M. CAPONE) * Figur 3, Spalte 3, Zeilen 1-6 * | 1 | |
| A | DE-A-2 950 658  (KRUPP POLYSIUS AG) | | |
| A | DE-A-2 729 220 (ELKEM-SPIGERVERKET A/S) | | |
| A | US-A-2 901 626  (H. BECKER) | | |

RECHERCHIERTE SACHGEBIETE (Int. Cl. ³)

G 01 N    1/22

Der vorliegende Recherchenbericht wurde für alle Patentansprüche erstellt.

| Recherchenort | Abschlußdatum der Recherche | Prüfer |
|---|---|---|
| BERLIN | 04-02-1983 | SCHWARTZ K |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82